# EUROPEAN PATENT APPLICATION

(11) **EP 4 510 439 A1**
(43) Date of publication of application: **19.02.2025**
(21) Application number: 23191234.6
(22) Date of filing: 14.08.2023
(51) Int. Cl.: H02P 6/16

(54) **ELECTRIC MOTOR CALIBRATION**

(71) Applicant: Sandvik Mining and Construction Oy, 33330 Tampere (FI)
(72) Inventor: Matilainen, Sami, 33311 Tampere (FI); Rajala, Tommi, 33311 Tampere (FI)
(74) Representative: Sandvik

(57) **Abstract**

According to an aspect, there is provided a calibration method for a machine control system controlling an inverter associated with an electric motor. The method comprises providing a human-machine interface associated with the machine control system for calibrating a position sensor of the electric motor; receiving, via the human-machine interface, a user input initiating the calibration of the position sensor of the electric motor; performing with the machine control system the calibration of the position sensor of the electric motor in response to receiving the user input; and providing, via the human-machine interface, a calibration result.

## Description

### TECHNICAL FIELD

This disclosure relates to vehicles using electric motors controlled by inverters. Particularly, this disclosure relates to calibration of a position sensor of an electric motor.

### BACKGROUND

Various machines, for example, mining vehicles, use electric motors. An inverter is a device that converts DC power to AC power used in an electric motor. The inverter can change the speed at which the motor rotates by adjusting the frequency of the alternating current. Before the electric motor can be used, a calibration of the position sensor of the electric motor needs to be performed. An electric motor position offset calibration is a basic calibration done to all electric motors before they can be used. The calibration may be performed using third party external software, such as the manufacturer's programming software. This procedure requires a connection from a laptop computer to the inverter with a suitable programming cable. Furthermore, in order to perform calibrations, maintenance personnel needs to be trained for using the third party software. Alternatively, special supplier maintenance may be required. Further, if a vehicle manufacturer uses several different inverters, each inverter needs respective different software for the calibration of the position sensor of the electric motor.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure disclose an efficient solution for performing a calibration of a position sensor of the electric motor using a machine control system associated with a vehicle. This and other benefits may be achieved by the features of the independent claims. Further advantageous implementation forms are provided in the dependent claims, the description, and the drawings.

According to a first aspect, there is provided a calibration method for a machine control system controlling an inverter associated with an electric motor. The method comprises providing a human-machine interface associated with the machine control system for calibrating a position sensor of the electric motor; receiving, via the human-machine interface, a user input initiating the calibration of the position sensor of the electric motor; performing with the machine control system the calibration of the position sensor of the electric motor in response to receiving the user input; and providing, via the human-machine interface, a calibration result.

According to a second aspect, there is provided a machine control system controlling an inverter associated with an electric motor. The machine control system comprises at least one processor and at least one memory including computer program code, the at least one memory and the computer program code configured to with the at least one processor, cause the machine control system at least to provide a human-machine interface associated with the machine control system for calibrating a position sensor of the electric motor; receive, via the human-machine interface, a user input initiating the calibration of the position sensor of the electric motor; perform the calibration of the position sensor of the electric motor in response to receiving the user input; and provide, via the human-machine interface, a calibration result.

According to a third aspect, there is provided a vehicle comprising a machine control system according to the second aspect, at least one electric motor and at least one inverter, each inverter being associated with a respective electric motor.

According to a fourth aspect, there is provided a computer program comprising instructions for causing a machine control system according to the second aspect to carry out the method according to the first aspect.

According to a fifth aspect, a non-transitory computer readable medium comprises a computer program comprising instructions for causing a machine control system according to the second aspect to carry out the method according to the first aspect.

According to a sixth aspect, there is provided a machine control system controlling an inverter associated with an electric motor. The machine control system comprises means for: providing a human-machine interface associated with the machine control system for calibrating a position sensor of the electric motor; receiving, via the human-machine interface, a user input initiating the calibration of the position sensor of the electric motor; performing the calibration of the position sensor of the electric motor in response to receiving the user input; and providing, via the human-machine interface, a calibration result.

### BRIEF DESCRIPTION OF THE DRAWINGS

The accompanying drawings, which are included to provide a further understanding of the example embodiments and constitute a part of this specification, illustrate examples and together with the description help to explain the principles of the example embodiments. In the drawings:
**FIG. 1A** illustrates an example graphical user interface view associated with a calibration procedure of a position sensor of an electric motor according to an example embodiment.
**FIG. 1B** illustrates an example graphical user interface view associated with a calibration procedure of a position sensor of an electric motor according to an example embodiment.
**FIG. 1C** illustrates an example graphical user interface view associated with a calibration procedure of a position sensor of an electric motor according to an example embodiment.
**FIG. 1D** illustrates an example graphical user interface view associated with a calibration procedure of a position sensor of an electric motor according to an example embodiment.
**FIG. 1E** illustrates an example graphical user interface view associated with a calibration procedure of a position sensor of an electric motor according to an example embodiment.
**FIG. 2** illustrates a machine control system according to an example embodiment.
**FIG. 3** illustrates a system according to an example embodiment.
**FIG. 4** illustrates a calibration method for a machine control system controlling an inverter associated with an electric motor according to an example embodiment.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The detailed description sets forth a solution for calibrating a position sensor of an electric motor of a vehicle using a machine control system associated with the vehicle.

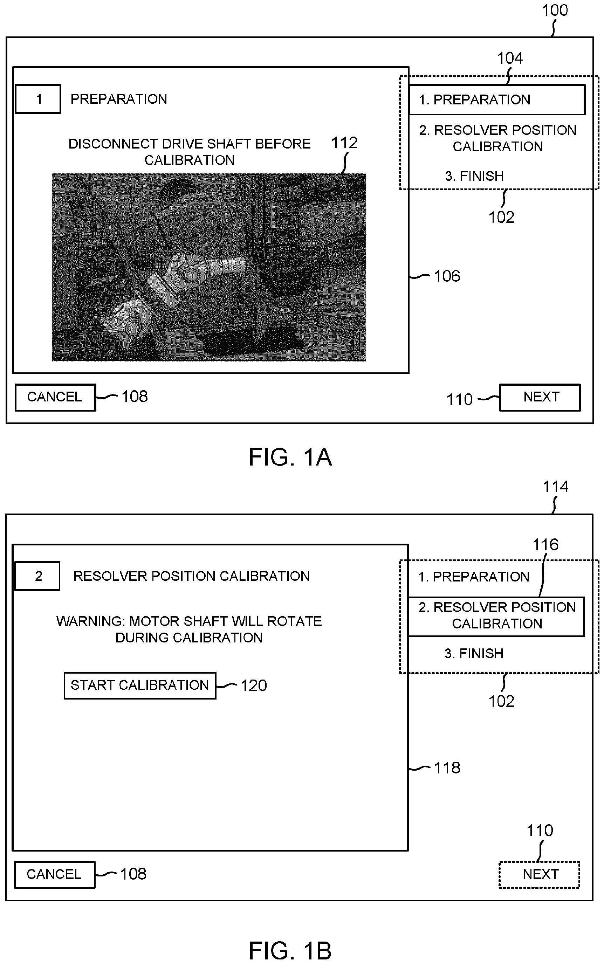

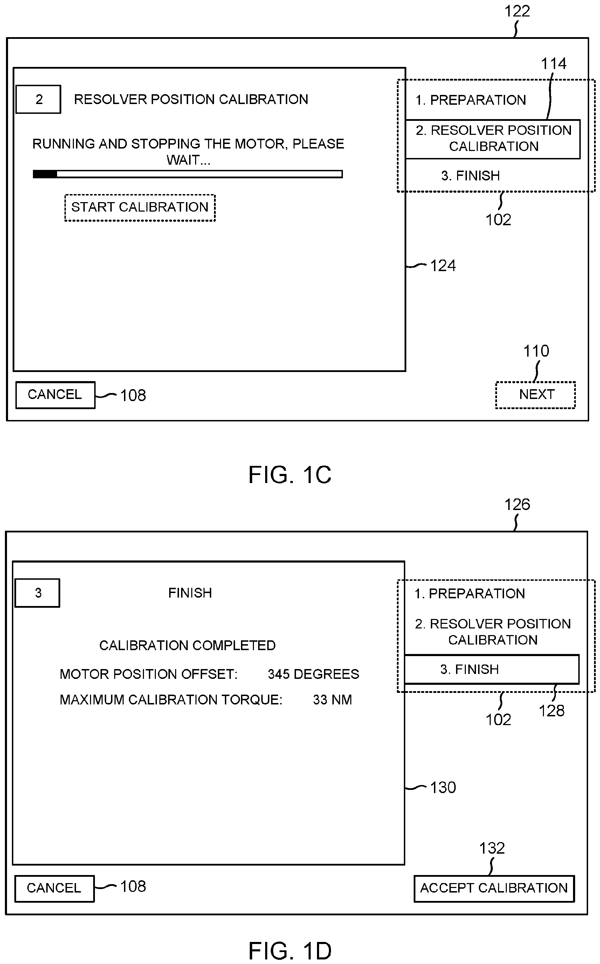

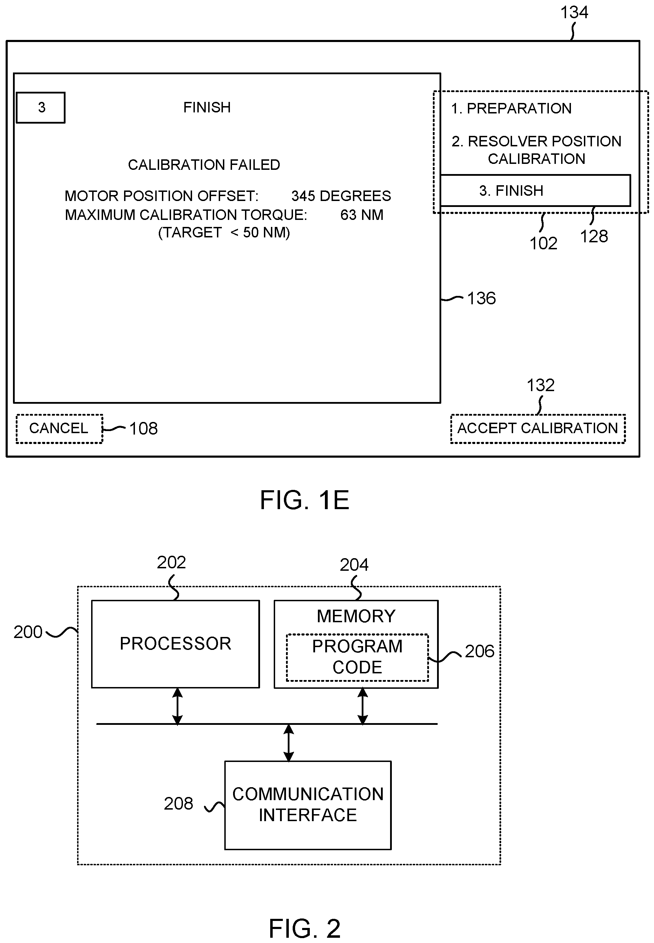

FIGS. 1A-1E illustrate example graphical user interface views 100, 114, 122, 126, 134 associated with a calibration procedure of a position sensor of an electric motor according to an example embodiment. The graphical user interface views 100, 114, 122, 126, 134 may be provided by a machine control system controlling operations of a vehicle comprising the electric motor. The illustrated graphical user interface views 100, 114, 122, 126, 134 are examples of a human-machine interface that can used to interact with a user. In other example embodiment, alternatively or additionally, for example, physical button(s) and/or voice input/output may be used.

A phase of the calibration procedure may be indicated in an information section 102 of the graphical user interface view 100. An information section 106 associated with a preparation phase 104 may provide instructions to a user how to proceed with the calibration. For example, an instruction may be given to the user to disconnect a drive shaft before calibration. In an example embodiment, an image 112 emphasizing this may be provided to the user. The user may cancel the calibration procedure via a selection item 108, for example, a button, or to proceed further by selecting a selection item 110.

The graphical user interface view 114 may illustrate a second phase 116 relating to the calibration procedure. In the second phase 116, the user is able to start the actual calibration by selecting a selection item 120 from an information section 118. The information section 118 may also issue a warning to the user that a motor shaft will rotate during the calibration. During the calibration, the inverter rotates the electric motor slightly, typically only one rotation, in order to identify an orientation of the position sensor with respect to a rotor of the electric motor. When the calibration is started, the machine control system may send at least one command to the inverter to allow the calibration. The user can select to start the calibration by selecting the selection item 120 or cancel the calibration procedure by selecting the selection item 108.

The graphical user interface view 122 may be provided after the user has started the calibration via the selection item 120. An information section 124 may provide status information about the calibration, for example, via a progressing bar.

The graphical user interface view 126 may illustrate a third phase 128, when the calibration has been completed. An information section 130 may provide results relating to the calibration. For example, the results may comprise a motor position offset identified during the calibration and a maximum calibration torque measured. The user may cancel the calibration process via the selection item 108 or alternatively accept the calibration result via a selection item 132.

The graphical user interface view 134 illustrates a situation when the calibration has failed. A reason for the failure may be that a maximum calibration torque threshold, for example, 50 Nm, has been exceeded, as indicated by an information section 136.

FIG. 2 illustrates a block diagram of a machine control system 200 controlling an inverter associated with an electric motor. The machine control system 200 may be configured to practice one or more example embodiments discussed herein.

The machine control system 200 may comprise at least one processor 202 and at least one memory 204 including computer program code 206, wherein the at least one memory 204 with the computer program 206 code may be configured, with the at least one processor 202, to cause the machine control system 200 at least to provide a human-machine interface associated with the machine control system for calibrating a position sensor of the electric motor; receive, via the human-machine interface, a user input initiating the calibration of the position sensor of the electric motor; perform the calibration of the position sensor of the electric motor in response to receiving the user input; and provide, via the human-machine interface, a calibration result.

The machine control system 200 may also include a communication interface 208 for wired and/or wireless communication. The communication interface 208 may enable, for example, connections to peripheral components, such as a screen, touchscreen, a physical button, or a keyboard, that a user may configure the machine control system 200 with, or via which the user may obtain information from or provide information to the machine control system 200. Further, the communication interface 208 may be configured to exchange data between different devices, for example, the inverter and a display configured to provide a graphical user interface.

When the machine control system 200 is configured to implement some functionality, some component and/or components of machine control system 200, for example, the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, the machine control system 200 comprises a processor or processor circuitry, such as for example a microcontroller, configured by the program code 206, when executed, to execute the embodiments of the operations and functionality described herein. The program code 206 is provided as an example of instructions which, when executed by the at least one processor 202, cause performance of machine control system 200.

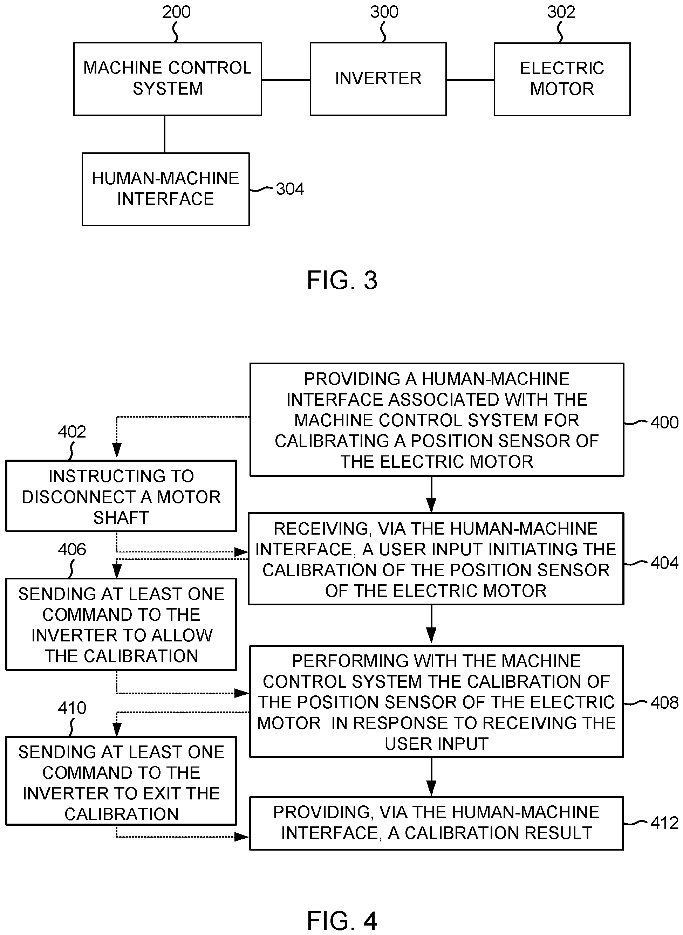

An example embodiment of a computer program comprises instructions, stored in a computer-readable storage medium, that causes a machine control system to perform the method(s) described herein, such as the method illustrated in FIG. 4.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

The machine control system 200 may be configured to perform, or cause performance of, method(s) described herein or comprise means for performing method(s) described herein. In one example, the means may comprise the at least one processor 202, the at least one memory 204 including program code 206 configured to, when executed by the at least one processor 202, cause the machine control system 200 to perform the method(s). In general, computer program instructions may be executed on means providing generic processing functions. Such means may be embedded for example in a personal computer, a tablet computer or the like. The method(s) may thus be computer-implemented, for example based algorithm(s) executable by the generic processing functions, an example of which is the at least one processor 202. The means may comprise transmission or reception means, for example one or more radio transmitters or receivers, which may be coupled or be configured to be coupled to one or more antennas, or transmitter(s) or receiver(s) of a wired communication interface. Although the machine control system 200 is illustrated as a single device, it is appreciated that, wherever applicable, functions of the machine control system 200 may be distributed to a plurality of devices.

FIG. 3 illustrates a system according to an example embodiment. The system comprises a machine control system 200 configured to control operations of a vehicle, for example, a mining vehicle or an underground mining vehicle. The system further comprises at least one inverter 300 communicatively connected to the machine control system 200, and at least one electric motor 302. Each inverter 300 may be associated with a respective electric motor 302. The inverter 300 converts DC power to AC power used in the electric motor 302. The inverter 300 can change the speed at which the electric motor 302 rotates by adjusting the frequency of the alternating current. If there is more than one electric motor 302 in the vehicle, a corresponding inverter is associated with each electric motor.

The system further comprises a human-machine interface 304. The machine control system 200 may be configured to control the human-machine interface 304 to interact with a user. The human-machine interface 304 may refer to one or more interfaces with which a human may interact with the machine control system 200. For example, the human-machine interface 304 may refer to a graphical user interface provided by a display or a touch-sensitive display for a user to perform the calibration procedure discussed herein. Alternatively or additionally, the human-machine interface 304 may comprise one or more other interfaces. For example, a physical button may be used to enable the user input for initiating the calibration. The calibration result may then be provided, for example, via a graphical user interface or via audio output. In another example, both the initiation of the calibration and the calibration result may be provided via audio output. For example, the user may provide the user input via a voice command, and the calibration result may be provided using predefined audio signals or voiced text output.

FIG. 4 illustrates a calibration method for a machine control system controlling an inverter associated with an electric motor according to an example embodiment. The method may be a computer-implemented method that may be executed, for example, by the machine control system 200.

At 400, a human-machine interface associated with the machine control system for calibrating a position sensor of the electric motor may be provided. The human-machine interface, for example, a graphical user interface, may be used to guide a user through the calibration procedure. Additionally, in an example embodiment, at 402, the user may be instructed, via the human-machine interface, to disconnect a motor shaft before initiating the calibration of the position sensor of the electric motor.

At 404, a user input initiating the calibration of the position sensor of the electric motor may be received via the human-machine interface. For example, the human-machine interface may provide a selection item to initiate the calibration. Optionally, at least one of instructions and warnings relating to the calibration may be additionally provided. Additionally, in an example embodiment, at 406, at least one command may be sent to the inverter to allow the calibration.

At 408, the calibration of the position sensor of the electric motor may be performed with the machine control system in response to receiving the user input. The machine control system may control the inverter to operate the electric motor in order to perform the calibration of the position sensor of the electric motor. Additionally, in an example embodiment, at 410, when the calibration has been performed, the machine control system may be configured to send at least one command to the inverter to exit the calibration.

At 412, a calibration result may be provided via the human-machine interface. The calibration result may indicate a success or failure of the calibration. In an example embodiment, the calibration result may comprise at least one of a motor position offset and a maximum calibration torque.

A calibration method for a machine control system controlling an inverter associated with an electric motor may be provided. The method comprises providing a human-machine interface associated with the machine control system for calibrating a position sensor of the electric motor; receiving, via the human-machine interface, a user input initiating the calibration of the position sensor of the electric motor; performing with the machine control system the calibration of the position sensor of the electric motor in response to receiving the user input; and providing, via the human-machine interface, a calibration result.

The method may further comprise sending at least one command to the inverter to allow the calibration.

The method may further comprise instructing, via the human-machine interface, to disconnect a motor shaft before initiating the calibration of the position sensor of the electric motor.

The calibration result may comprise at least one of a motor position offset and a maximum calibration torque.

The calibration result may comprise a calibration failure indication.

The method may further comprise sending at least one command to the inverter to exit the calibration after performing with the machine control system the calibration of the position sensor of the electric motor.

A machine control system controlling an inverter associated with an electric motor may be provided. The machine control system comprises at least one processor and at least one memory including computer program code, the at least one memory and the computer program code configured to with the at least one processor, cause the machine control system at least to provide a human-machine interface associated with the machine control system for calibrating a position sensor of the electric motor; receive, via the human-machine interface, a user input initiating the calibration of the position sensor of the electric motor; perform the calibration of the position sensor of the electric motor in response to receiving the user input; and provide, via the human-machine interface, a calibration result.

The at least one memory and the computer program code may be configured to, with the at least one processor, cause the machine control system at least to send at least one command to the inverter to allow the calibration.

The at least one memory and the computer program code may be configured to, with the at least one processor, cause the machine control system at least to instruct, via the human-machine interface, to disconnect a motor shaft before initiating the calibration of the position sensor of the electric motor.

The calibration result may comprise at least one of a motor position offset and a maximum calibration torque.

The calibration result may comprise a calibration failure indication.

The at least one memory and the computer program code may be configured to, with the at least one processor, cause the machine control system at least to send at least one command to the inverter to exit the calibration after performing with the machine control system the calibration of the position sensor of the electric motor.

A vehicle comprising the machine control system discussed above, at least one electric motor and at least one inverter, each inverter being associated with a respective electric motor, may be provided.

A computer program comprising instructions for causing a machine control system discussed above to carry out the method discussed above may be provided.

A non-transitory computer readable medium comprises a computer program instructions for causing a machine control system discussed above to carry out the method discussed above may be provided.

A machine control system controlling an inverter associated with an electric motor may be provided. The machine control system comprises means for: providing a human-machine interface associated with the machine control system for calibrating a position sensor of the electric motor; receiving, via the human-machine interface, a user input initiating the calibration of the position sensor of the electric motor; performing the calibration of the position sensor of the electric motor in response to receiving the user input; and providing, via the human-machine interface, a calibration result.

One or more of the examples and example embodiments discussed above may enable a solution in which third party software solutions for calibrating a position sensor of the electric motor is no longer needed. Further, one or more of the examples and example embodiments discussed above may enable a solution in which the calibration can be easily performed, for example, during a production phase without special personnel or specially trained personnel. Further, one or more of the examples and example embodiments discussed above may enable a solution in which a commissioning time of electric motors is shortened as the calibration can be performed efficiently. The commissioning may comprise, for example, the following: software installation, calibration, adjustments and operation verification. When the calibration can be performed efficiently, the commissioning time becomes shorter. Further, one or more of the examples and example embodiments discussed above may enable a solution in which a human-machine interface, for example, a graphical user interface, enables only required functions for a user for performing the calibration and guides the user safely throughout the calibration procedure. Further, one or more of the examples and example embodiments discussed above may enable a solution in which a calibration procedure, when an existing inverter or electric motor has been replaced with a new inverter or electric motor, can be performed efficiently and safely.

It is obvious to a person skilled in the art that with the advancement of technology, the basic idea of the apparatus may be implemented in various ways. The apparatus and its embodiments are thus not limited to the examples described above; instead they may vary within the scope of the claims.

## Claims

1. A calibration method for a machine control system controlling an inverter associated with an electric motor, the method comprising:
providing a human-machine interface associated with the machine control system for calibrating a position sensor of the electric motor;
receiving, via the human-machine interface, a user input initiating the calibration of the position sensor of the electric motor;
performing with the machine control system the calibration of the position sensor of the electric motor in response to receiving the user input; and
providing, via the human-machine interface, a calibration result.

2. The method according to claim 1, further comprising:
sending at least one command to the inverter to allow the calibration.

3. The method according to any one of claims 1 - 2, further comprising:
instructing, via the human-machine interface, to disconnect a motor shaft before initiating the calibration of the position sensor of the electric motor.

4. The method according to any one of claims 1 - 3, wherein the calibration result comprises at least one of a motor position offset and a maximum calibration torque.

5. The method according to any one of claims 1 - 3, wherein the calibration result comprises a calibration failure indication.

6. The method according to any one of claims 1 - 5, further comprising:
sending at least one command to the inverter to exit the calibration after performing with the machine control system the calibration of the position sensor of the electric motor.

7. A machine control system (200) controlling an inverter associated with an electric motor, the machine control system comprising:
at least one processor (202); and
at least one memory (204) including computer program code (206), the at least one memory (204) and the computer program code configured to with the at least one processor (202), cause the machine control system (200) at least to:
provide a human-machine interface associated with the machine control system for calibrating a position sensor of the electric motor;
receive, via the human-machine interface, a user input initiating the calibration of the position sensor of the electric motor;
perform the calibration of the position sensor of the electric motor in response to receiving the user input; and
provide, via the human-machine interface, a calibration result.

8. The machine control system (200) of claim 7, wherein the at least one memory (204) and the computer program code (206) are configured to with the at least one processor (202), cause the machine control system (200) at least to:
send at least one command to the inverter to allow the calibration.

9. The machine control system (200) of claim 7, wherein the at least one memory (204) and the computer program code (206) are configured to with the at least one processor (202), cause the machine control system (200) at least to:
instruct, via the human-machine interface, to disconnect a motor shaft before initiating the calibration of the position sensor of the electric motor.

10. The machine control system (200) of any one of claim 7 - 9, wherein the calibration result comprises at least one of a motor position offset and a maximum calibration torque.

11. The machine control system (200) of any one of claim 7 - 9, wherein the calibration result comprises a calibration failure indication.

12. The machine control system (200) of any one of claims 7 - 11, wherein the at least one memory (204) and the computer program code (206) are configured to with the at least one processor (202), cause the machine control system (200) at least to:
send at least one command to the inverter to exit the calibration after performing with the machine control system the calibration of the position sensor of the electric motor.

13. A vehicle comprising:
a machine control system (200) according to any one of claims 7 - 12;
at least one electric motor (302);
at least one inverter (300), each inverter (300) being associated with a respective electric motor (302) .

14. A computer program comprising instructions for causing a machine control system (200) of any one of claims 7 - 12 to carry out the method of any one of claims 1 - 6.
